# EUROPEAN PATENT SPECIFICATION

(11) **EP 1 312 890 B1**
(45) Date of publication and mention of the grant of the patent: **14.04.2010**
(21) Application number: 01956939.1
(22) Date of filing: 17.08.2001
(51) Int. Cl.: G01B 21/08, A01J 25/12

(54) **METHOD OF DETECTING AND IDENTIFYING THICKNESS OF SHEET-LIKE FOOD, METHOD OF MANUFACTURING SHEET-LIKE FOOD, AND DEVICES THEREFOR**
METHODE ZUR DETEKTIERUNG UND IDENTIFIKATION DER DICKE VON BLATTFÖRMIGER NAHRUNG, VERFAHREN UND VORRICHTUNG ZUR FABRIKATION VON BLATTFÖRMIGER NAHRUNG
PROCEDE DE DETECTION ET D'IDENTIFICATION DE L'EPAISSEUR D'UN ALIMENT DU TYPE FEUILLE, PROCEDE DE FABRICATION DUDIT ALIMENT ET DISPOSITIFS ASSOCIES

(30) Priority: 21.08.2000 JP 2000249868
(43) Date of publication of application: 21.05.2003
(73) Proprietor: MORINAGA MILK INDUSTRY CO., LTD., Minato-ku, Tokyo 108-8384 (JP)
(72) Inventor: KIKUCHI, Motokazu, c/o Morinaga Milk Industry Co, Ltd., Higashiyamato-shi, Tokyo 207-0021 (JP); NAKANUMA, Hiroshi, c/o Morinaga Milk Ind Co., Ltd., Higashiyamato-shi, Tokyo 207-0021 (JP); OTSUJI, Junichi, c/o Morinaga Milk Ind. Co., Ltd., Higashiyamato-shi, Tokyo 207-0021 (JP)
(74) Representative: Brykman, Georges
(86) International application number: PCT/JP2001/007081
(87) International publication number: WO 2002/016869

(56) References cited:
- EP-A- 0 449 512
- WO-A-93/24287
- DE-A1- 19 604 254
- GB-A- 2 335 488
- JP- - 6 180 213
- JP-A- 1 304 306
- JP-A- 58 134 713
- US-A- 5 229 840

## Description

### TECHNICAL FIELD

The present invention relates to a method of measuring and a method of judging the thickness of sheet type food that are suitable for production management of a range of sheet type food such as cheese slices, a sheet type food production method in which the judgment method is used, and apparatus for the same.

### BACKGROUND ART

In recent years, a range of sheet type food has been sold on the market and is becoming popular. Cheese slices can be considered representative of such sheet type food.

Cheese slices make a simple breakfast when placed on bread and heated in an oven, and are also widely used as food for sandwiches. The market is expanding as the use of bread becomes widespread in ordinary households.

The following are typical examples of cheese slice production methods. That is to say, a technique for obtaining cheese slices in which fresh cheese is melted, the melted fresh cheese is cooling molded, and the obtained cheese blocks are sliced to an appropriate thickness by a slicer, or a technique for obtaining cheese slices in which melted fresh cheese is drawn out in a thin board for cooling solidification and cut appropriately. Furthermore, there is another technique in which melted fresh cheese is continuously poured into a film pipe, the film pipe is pressed into a flattened shape, and cooling solidified. Here, in all of the techniques, cheese slices are usually stacked after molding into a stack form.

In such production techniques, it is possible to appropriately regulate the thickness of cheese slices to be produced. For example, in the technique of slicing cheese blocks, the width may be regulated when slicing. Furthermore, in the technique of drawing the melted fresh cheese out into a thin board, the clearance when drawing may be regulated.

Incidentally, with respect to production management in the production of cheese slices, there is an issue of whether the thickness of cheese slices is within a required range or not. That is to say, in the case where a cheese slice is thinner than the required thickness, it is a nonstandard product and so it cannot be shipped. Conversely, in the case where a cheese slice is thicker than the required thickness, yield deteriorates, causing an increase in production cost.

Accordingly, in a cheese slice production process, it is desirable to measure the thickness of cheese slices during production. Furthermore, in regard to production management it is desirable to judge whether the thickness is within a required range or not.

In general in the field of sheet type food, not limited to cheese slices, there are the following conventional techniques for measuring, or techniques for judging, the thickness of sheet type food:
a) a technique in which the thickness of conveyed sheet type food is assured visually by an operator using a scale,
b) a technique in which conveyed sheet type food is passed along a weightometer, and the momentary weight of the conveyed sheet type food is measured,
c) a technique in which it is judged by machine vision imaging (for example, Japanese Unexamined Patent Application, First Publication No. 5-277990).

However, in technique a), there is a problem in that it is not possible to measure the thickness of sheet type food continuously, and hence additional complexity is required. Furthermore, in technique b), the response when measuring the weight of sheet type food is poor, and a time difference of several minutes occurs. Particularly in the case where the sheet type food is conveyed at high speed, it is not possible to control the thickness automatically.

Moreover, the installation of machine vision in c) is expensive, and since it involves precision mechanical equipment, it is not suitable for installation at a food factory site where water or antiseptic solution is used predominantly for cleaning. Furthermore, since large-scale lighting equipment is required, the installation space becomes large, and hence it is not generally suitable for equipment to be used at a food factory site.

The documents DE 19604254, EP-A-0449512, WO 93/24287 and US-A-5229840 also disclose methods and apparatus for producing sheet type food.

### DISCLOSURE OF INVENTION

An object of the present invention is to provide a method of measuring the thickness of sheet type food that does not require manual operation, is capable of continuous monitoring, has quick response, and can contribute to improvement in yield, stability of quality, and cost reduction.

Another object of the present invention is to provide a method of judging the thickness of sheet type food, wherein such a measuring method is used.

Furthermore, another object of the present invention is to provide a method of producing sheet type food, wherein such a measuring method is used.

Moreover, another object of the present invention is to provide a measuring apparatus, a judgment apparatus and a production apparatus to perform such a measuring method, judgment method and production method respectively.

The present invention is defined by a method according to claim 1 and an apparatus according to claim 2.

A first aspect of the present invention to solve the above-described problems is a method of measuring the thickness of sheet type food wherein sheet type food is conveyed, and the position of the surface of the sheet type food conveyed is measured by a non-contact displacement meter, thus the thickness of the sheet type food is measured. Furthermore, a preferred embodiment of this first aspect of the invention is that conveyance of sheet type food and measurement of the position of the surface are performed continuously.

A second aspect of the present invention to solve the above-described problems is a method of judging the thickness of sheet type food wherein the thickness of sheet type food is measured by a measuring method of the first aspect of the invention, the measured measurement value and/or the difference between the measurement value and a preset reference value is compared with a preset threshold, and it is judged whether the thickness of the sheet type food is within a required range or not.

A third aspect of the present invention to solve the above-described problems is a method of producing sheet type food wherein sheet type food is produced continuously, the produced sheet type food is conveyed continuously, the position of the surface of the conveyed sheet type food is measured continuously by a non-contact displacement meter, and the thickness of the sheet type food is regulated such that the measurement value approaches a preset value.

A fourth aspect of the present invention to solve the above-described problems is an apparatus for measuring the thickness of sheet type food having: a conveyor which conveys sheet type food continuously; a non-contact displacement meter which is positioned at a predetermined height above the conveyor and measures the position of the surface of the sheet type food conveyed; and an amplifier unit which is connected to the non-contact displacement meter and converts the measurement value from the non-contact displacement meter into an output signal for output.

A fifth aspect of the present invention to solve the above-mentioned problems is an apparatus for judging the thickness of sheet type food, wherein there are provided: a conveyor which conveys sheet type food continuously; a non-contact displacement meter which is positioned at a predetermined height above the conveyor and measures the position of the surface of the sheet type food conveyed; an amplifier unit which is connected to the non-contact displacement meter and converts the measurement value from the non-contact displacement meter into an output signal for output; and a signal processor which is connected to the amplifier unit, and compares the output value output from the amplifier unit and/or the difference between the output value and a preset standard value with a preset threshold, judges whether the thickness of the sheet type food is within a required range or not, and outputs the judgment result as a judgment signal.

A sixth aspect of the present invention to solve the above-described problems is an apparatus for producing sheet type food having a main body of a production apparatus which produces sheet type food, and a thickness regulator that is installed in the production apparatus body and regulates the thickness of sheet type food, wherein there are provided: a conveyor which conveys sheet type food produced by the production apparatus continuously; a non-contact displacement meter which is positioned at a predetermined height above the conveyor and measures the position of the surface of the sheet type food conveyed; an amplifier unit which is connected to the non-contact displacement meter and converts the output value from the non-contact displacement meter into a measurement signal for output; and a controller which is connected to the output side of the amplifier unit, and calculates a modulated value by which the measurement signal input from the amplifier unit approaches a set value set in advance and outputs it to the thickness regulator, and sheet type food is produced under control such that the thickness of the sheet type food is kept to a predetermined thickness.

### BRIEF DESCRIPTION OF DRAWINGS

FIG. 1 is a schematic structural diagram showing an embodiment of an apparatus of the present invention.
FIG. 2 is a scatter chart showing a relationship between displacement of the thickness of cheese slice stacks and a measured value of the weight, measured by a measurement apparatus.

### BEST MODE FOR CARRYING OUT THE INVENTION

A first aspect of the present invention is a method of measuring the position of the surface of sheet type food. In the measuring method of the present invention, sheet type food is firstly conveyed. Conveyance may be performed using well-known conveying devices, for example a chill-roll, a chain conveyor, a shooter, a belt conveyor, etc.

Sheet type food to be conveyed may be in a continuous state (a form like a bandage). However, it may be cut appropriately into an individual state (a form like paper).

Furthermore, sheet type food may be conveyed in a piece state. However, it may be conveyed in a stack state in which a plurality of sheet type food is stacked.

A non-contact displacement meter measures the position of the surface of sheet type food conveyed in this manner.

It is desirable to use an optical displacement meter or an ultrasonic displacement meter for the non-contact displacement meter.

It is preferable to use laser radiation for the optical displacement meter. However, in the case where sheet type food is transmissive (for example, in the case of some kinds of cheese slices, and the like), it is preferable to use an ultrasonic meter.

Since an ultrasonic meter can measure a longer distance compared with an optical meter, there is an advantage in that the surface of a conveyor can easily be set to a zero point in a state where there is no sheet type food. Furthermore, there are fewer malfunctions caused by dirt and the like, and operational reliability is high. Moreover, since mean values can be measured in a comparatively wide measurement region, it is possible to extend measurement targets not only to the vertical position of the surface of sheet type food but also in the horizontal direction. In other words, mean values are measured in a "surface" state, hence the reliability of measurement is high. Moreover, it also excels in that there is no malfunction even with objects like kinds of cheese slice that are transmissive to light.

Here, "measure the position of the surface of sheet type food" means simply, in the case where a non-contact displacement meter is installed, to measure a distance (for convenience, this distance is designated X) from the position of the surface of sheet type food to the position of the non-contact displacement meter. In this case, since a distance (this distance is designated Y) from the position of the surface of the conveyor along which the sheet type food is conveyed to the position of the non-contact displacement meter is constant, the result from subtracting the distance X from the distance Y represents the thickness of the sheet type food.

Accordingly, by measuring the position of the surface of the sheet type food, it is possible to measure the thickness of the sheet type food.

In this manner, it is possible to visualize the measurement result of the thickness of the sheet type food by displaying on various display units. Furthermore, it may be recorded and the change in thickness monitored continuously.

In general, the response time of a non-contact displacement meter is short, so that compared with the technique of measuring the weight of sheet type food as in the above-described prior art, the response is quicker, accuracy is better, and time lag is less. Therefore, it is possible to measure the thickness of sheet type food accurately.

Here, needless to say, in such a measuring method it is desirable that sheet type food is conveyed continuously, and that the thickness is measured continuously.

A second aspect of the present invention is a method of judging the thickness of sheet type food. In the judgment method, firstly the thickness of sheet type food is measured similarly to the first aspect of the invention.

If the measurement value is compared with a preset threshold, it is possible to judge whether the thickness of the sheet type food is within a required range or not. For example, two thresholds are set, upper limit and lower limit, and in the case where the measurement value is outside of the range between the upper limit and the lower limit, it is judged that the thickness of the sheet type food is not in the required range.

In this manner, "judgment" means to judge whether the measurement value is within a required range or not.

In this case, only one threshold may be set, and it may be judged by whether the measurement value is higher or lower than the threshold. However, it is preferable that a plurality of thresholds is set, and that it is judged in which of a plurality of threshold ranges the measurement value is.

Furthermore, it is also possible that the measurement value is not compared with the threshold directly, but that the difference between the measurement value and a preset standard value is calculated, and the value thus calculated compared with the threshold.

In such a method, it is possible to judge whether the thickness of the sheet type food is within a required range or not. Of course, similarly to the first aspect of the invention, it is desirable to convey the sheet type food continuously and judge the thickness continuously.

It is possible to utilize the judgment result in a number of ways such as for output to an alarm and the like. That is to say, for example in the case where the thickness of the sheet type food is outside of the required range, an alarm may be set off to draw an operator's attention, or the production line may be stopped automatically.

In the judgment method, by using a non-contact displacement meter, the measurement response is fast, thus enabling reliable judgment with high accuracy. Furthermore, since it is possible to judge without contact with the sheet type food, it is hygienic, and hence it can be an especially suitable method for quality control.

Here, when the measuring method of the first aspect of the invention and the judgment method of the second aspect of the invention are put into practice, remodeling or replacing existing equipment (for example, conveying devices and the like) is not required. Therefore, there is also an advantage in that the initial investment cost is low.

Such a measuring method or judgment method can be applied to sheet type food of a variety of forms such as sheet type food in a long bandage shape, appropriately cut sheet type food, sheet type food stacked as laminated material after being cut, and the like.

Here, it is preferable that the measuring method or judgment method be used in a state where sheet type food is stacked. That is to say, this is because if it is stacked, since the thickness can be judged in a state with a plurality of sheet type food stacked, the accuracy of judgment is increased as a result.

A third aspect of the present invention is a method of producing sheet type food, wherein the first aspect of the invention is used.

In the production method of the present invention, sheet type food is firstly produced continuously using a conventional method. Next, the measuring method of the first aspect of the invention is applied to the sheet type food produced, and the thickness is measured. As described above, the timing for measurement may be after forming into sheet type food, may be after being cut appropriately, or may be after being stacked as laminated material. Furthermore, it may be after film is applied to sheet type food for sale. It is possible to choose the appropriate timing depending on the nature of the production method.

Then, after the thickness has been measured by the first aspect of the invention, the thickness of the sheet type food is regulated such that the measurement value approaches a preset value. That is to say, in the case where the thickness is greater than a required range, the thickness of the sheet type food is reduced, and in the case where the thickness is less than the required range, the thickness of the sheet type food is increased.

For example, in the case of the production method in which cheese blocks are cut to an appropriate thickness, the thickness may be regulated when it is cut by a slicer. Furthermore, in the case of the production method in which melted fresh cheese is drawn out into a thin board on a moving stainless belt or drum for cooling solidification, the thickness to be drawn out into the thin board may be regulated.

Using such a procedure, it is possible to produce sheet type food while controlling the thickness within a predetermined range.

Next is a description of an apparatus of the present invention. In the following description of the apparatus, each element of the present invention is designated by the same symbol in brackets as in an embodiment described later. The same symbols are given to the elements in the present invention and in the embodiment described later in order to make the present invention understood easily, but not to limit the scope of the present invention in the embodiment described later.

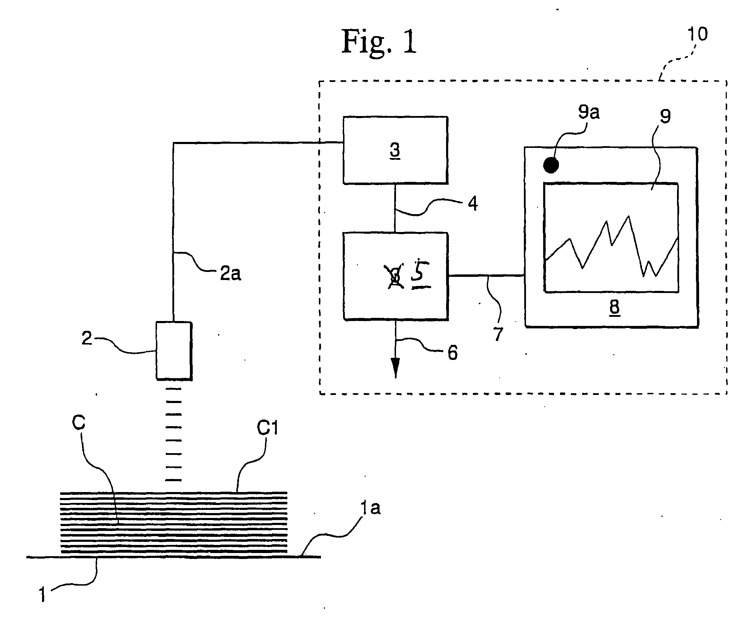

FIG. 1 is a schematic structural diagram showing an embodiment of an apparatus of the present invention.

A fourth aspect of the present invention is an apparatus for measuring the thickness of sheet type food. The measuring apparatus of the present invention is provided with a conveyor (1) which conveys sheet type food (C) continuously. Such a conveyor (1) may be a well-known conveying device.

Furthermore, the measuring apparatus is provided with a non-contact displacement meter (2) which measures the position (C1) of the surface of the sheet type food (C) conveyed by the conveyor (1), and an amplifier unit (3) which is connected to the non-contact displacement meter (2).

For such a non-contact displacement meter (2), an optical displacement meter (not shown in the figure), or an ultrasonic displacement meter (2) can be used. However, the latter is more desirable.

The amplifier (3), which is connected to such a non-contact displacement meter (2), has functions of amplifying the value measured by the non-contact displacement meter (2), and outputting it as an electrical signal. For example, it may be an apparatus that converts to an output signal whose form is readily usable by standard machines, such as electrical signals of 4 to 20 mA, 0 to 10V and the like. An amplifier is an example of such an amplifier unit (3).

Here, the non-contact displacement meter (2) and the amplifier unit (3) may be individual units. However, they may be constructed as one unit.

According to the measuring apparatus as above, it is possible to measure continuously the thickness of sheet type food (C) conveyed continuously by the conveyor (1). That is to say, the non-contact displacement meter (2) measures the position (C1) of the surface of the sheet type food (C), and the amplifier unit (3) amplifies the measurement value and converts it into an output signal for output, and the output signal can be used as a signal showing the thickness of the sheet type food (C).

For example, if it is output to an indicating and recording part (8), it is possible to monitor the thickness of the sheet type food (C) continuously, thus enabling continuous recording.

A pen recorder, the memory of a personal computer, the memory of a touch panel and the like are examples of such an indicating and recording part (8). Ones with an alarm function are preferable.

A fifth aspect of the present invention is an apparatus for judging the thickness of sheet type food using the measurement apparatus of the fourth aspect of the invention. This judgment apparatus is provided with a signal processor (5) which is connected to the amplifier unit (3). A programmable logic controller, a personal computer, a controller, a signal processor, a digital panel meter and the like are examples of such a signal processor (5).

This signal processor (5) has a function of comparing the output value output from the amplifier unit (3) and/or the difference between the output value and a preset standard value with a preset threshold, and judging whether the thickness of the sheet type food (C) is within a required range or not.

Such a signal processor (5) outputs a judgment result. A range of alarms, display units, recorders and the like are examples of output units.

For example, in the case of an alarm, in the case where the thickness of the sheet type food (C) is outside of the required range, the alarm may be set off in order to draw an operator's attention.

Furthermore, in the case where an indicating and recording part (8) including an alarm function is used, this indicating and recording part (8) can also set off the alarm in the case where the thickness is out of the required range, while monitoring the thickness of the sheet type food (C) continuously and recording it continuously.

Here, the signal processor (5) in FIG. 1 has a function of sending an output for indicating and recording the measurement value to the indicating and recording part (8), as well as such a judgment function. It has also a function as a kind of analog digital transducer.

A sixth aspect of the present invention is an apparatus for producing sheet type food. The production apparatus of the present invention is provided with a main body of a production apparatus (not shown in the figure), which produces sheet type food, and a thickness regulator (not shown in the figure), which is installed in the production apparatus body and regulates the thickness of sheet type food.

As an example of such a thickness regulator (not shown in the figure) which regulates the thickness of sheet type food, in the case of a production apparatus that cuts cheese blocks into an appropriate thickness, an apparatus that regulates the width of a slice is attached. Furthermore, in a production apparatus that draws out melted fresh cheese into a sheet shape, an apparatus that regulates the thickness when being drawn out into a sheet shape is attached.

The measurement apparatus of the fourth aspect of the invention is installed in such a production apparatus. That is to say a conveyor (1), a non-contact meter (2), and an amplifier unit (3) are installed.

Then, a controller (5) is connected to the amplifier unit (3), and an output line for a modulated value of this controller (5) is further connected to a thickness regulator (not shown in the figure) that is installed in the production apparatus.

Here, the controller (5) is designated by the same symbol as the signal processor (5). This is because the signal processor (5) in FIG. 1 also functions as the controller (5).

The controller (5) may be comprised of a well-known personal computer, controller or the like. Furthermore, it may be incorporated with the amplifier unit (3) or the indicating and recording part (8).

In such a production apparatus, the position (C1) of the surface of sheet type food (C) conveyed is firstly measured by the non-contact displacement meter (3), the measurement value obtained is converted into an output signal for output by the amplifier unit (3), and the controller (5) calculates a modulated value such that the output signal input from the amplifier unit (3) approaches a preset value and outputs it to the thickness regulator (not shown in the figure). As a result, it is possible to produce sheet type food under control such that the thickness of the sheet type food is kept to a predetermined value.

The present invention described above can be applied to a range of sheet type food. Such sheet type food includes all food in thin board shape. For example dried squid, rice paper, Japanese wheat noodles, buckwheat noodles and the like. However, it is ideal for application to cheese slices. Cheese slices can receive the maximum benefit of the present invention.

Next is a description of the present invention with an experimental example.

### Experimental Example

This experiment was performed in order to assure the accuracy of thickness measurement of the present invention.

### 1) Preparation of Sample

Laminated material of cheese slices as mentioned in an embodiment 5 described later was used as a sample.

### 2) Test Apparatus and Test Method

An apparatus as in an embodiment 1 described later (refer to FIG. 1. Also refer to FIG. 1 for the symbols used hereunder) was used, and cheese slice laminated material C conveyed by a belt conveyor 1 while the thickness was measured using an ultrasonic displacement meter 2. The measurement value was stored in a touch panel 8.

Furthermore, a measurement apparatus of an embodiment 4 described later was used together with the above apparatus, and the thickness of the cheese slice laminated material C similarly measured using a laser displacement meter (not shown in the figure). The measurement value was similarly stored in the memory of the touch panel 8.

Moreover, in an apparatus (FIG. 1) of embodiment 1 described later, a weightometer (not shown in the figure) was installed separately in the center of the belt conveyor 1, and the weight of the cheese slice laminated material C measured continuously, and similarly stored in the memory of the touch panel 8.

### 3) Experimental Results

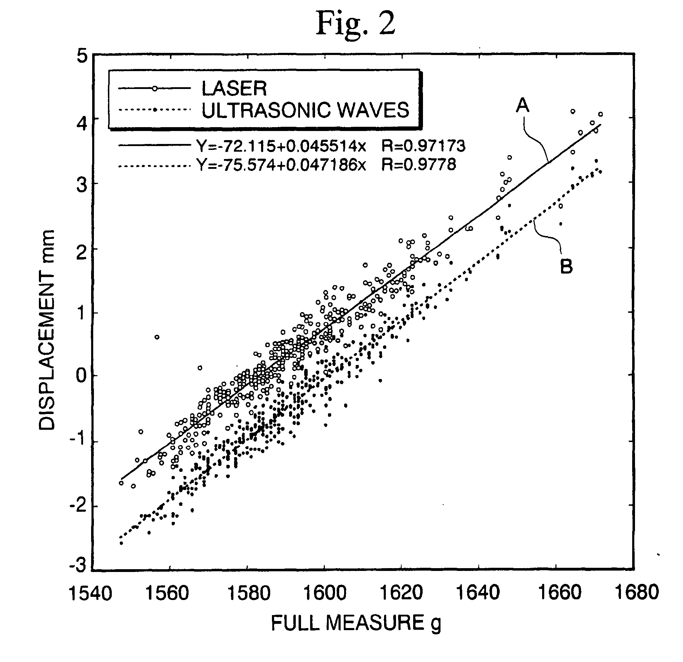

The result of this experiment is as shown in FIG. 2. FIG. 2 is a scatter chart showing the relationship between the displacement of the thickness of the cheese slice laminated material measured by the measurement apparatus of the present invention and the measured value of the weight.

In FIG. 2, the vertical axis represents the thickness (displacement) of cheese slice laminated material. This vertical axis indicates how many millimeters the thickness of the cheese slice laminated material is displaced from the zero point in the positive and negative directions with the zero point as the origin. Furthermore, the horizontal axis represents measured value (full measure) of the weight, in gram units. Here, since the measurement response of the weightometer is slow on the horizontal axis, a time difference occurred in the measurements of the ultrasonic and laser displacement meter on the vertical axis. However, in FIG. 2, this time difference has been corrected.

Line A in FIG. 2 is a regression line for data from the laser displacement meter, and line B is a regression line for data from the ultrasonic displacement meter.

In both of the measurement results, measurement accuracy was within a range of plus or minus 0.2mm, and the correlation coefficient with the measurement value of the weight was 0.98.

As FIG. 2 demonstrates, it is clear that that the measurement value according to the present invention correlates well with the measurement value of the weight.

As a result of this experiment, it is proven that the thickness of sheet type food can be measured with considerable accuracy.

### EMBODIMENTS

Next is a detailed description of the present invention using embodiments. However, the present invention is not limited to the following embodiments.

### Embodiment 1

FIG. 1 is a schematic structural diagram showing an embodiment of an apparatus of the present invention.

In FIG. 1, laminated material C of cheese slices C1 is conveyed on a belt conveyor 1 (that is, conveyor in the claims).

An ultrasonic displacement meter 2 (manufactured by Keyence Corporation, UD-020, that is, non-contact displacement meter in the claims) is installed in a predetermined position above the belt conveyor 1. Therefore the distance between the ultrasonic displacement meter 2 and surface 1a of the belt conveyor 1 is always constant.

Here, this ultrasonic displacement meter 2 is a type of meter that measures by averaging values in a test region of 10mm diameter, and hence the reliability of the measurement is high.

The ultrasonic displacement meter 2 is connected to a sensor amplifier 3 (that is, amplifier unit in the claims) by a cable 2a. The sensor amplifier 3 is provided with an output line 4, and a 0 to 5V analog signal is output on this output line 4. Here, FIG. 1 illustrates that the ultrasonic displacement meter 2 and the sensor amplifier 3 are constructed separately. However, they may also be used in a single unit construction.

An apparatus for measuring the thickness of sheet type food has the ultrasonic displacement meter 2 and the sensor amplifier 3 described above.

Next is a description of the operation of the measurement apparatus constructed as above.

The laminated material C of cheese slices is placed on the belt conveyor 1 and conveyed. The ultrasonic displacement meter 2 measures the position of the surface C1 of the cheese slice laminated material C. As described previously, since the distance between the ultrasonic displacement meter 2 and the surface 1a of the belt conveyor 1 is always constant, the position of the surface C1 of the cheese slice laminated material C correlates with the thickness of the cheese slice laminated material C.

A signal measured by the ultrasonic displacement meter 2 is input to the sensor amplifier 3 via the cable 2a. The sensor amplifier 3 amplifies the measured signal input, and after converting it to a 0 to 5V signal, outputs it on the output line 4. The apparatus for measuring the thickness of sheet type food operates in this manner.

Here, the ultrasonic displacement meter 2 is installed such that it can be attached and detached, so that it can be removed when the belt conveyor 1 or other equipment is cleaned.

### Embodiment 2

Next is a description of an embodiment of a judgment apparatus based on FIG. 1. In FIG. 1, the sensor amplifier 3 is provided with an output line 4, and a 0 to 5V analog signal is output on this output line 4.

The end of this output line 4 is connected to a programmable logic controller 5 (that is, a signal processor in the claims. This also serves as a controller in the claims.). The programmable logic controller 5 is also provided with an RS232C output line 7, and a touch panel 8 (manufactured by Keyence Corporation, VT-10T) is connected to the end of this RS232C output line 7. This touch panel 8 has functions of displaying data transmitted from the output line 7, monitoring it over time for display as a trend graph 9, and storing it in memory (not shown in the figure). Furthermore, the touch panel 8 is provided with an alarm light 9a. In other words, this touch panel 8 has functions such as zero point regulation, display of trend graph 9, present value display, alarm display, operating history display and the like.

Here, the sensor amplifier 3, the programmable logic controller 5, and the touch panel 8 are mounted on the same control panel 10.

The programmable logic controller 5, to which an upper limit and lower limit threshold are input in advance, has functions of comparing the 0 to 5V analog signal input from the output line 4 with the threshold and, in the case where the analog signal exceeds the upper limit threshold or in the case where it falls below the lower limit threshold, making the alarm light 9a installed in the touch panel 8 flash.

An apparatus for judging the thickness of sheet type food of the present invention has the ultrasonic displacement meter 2, the sensor amplifier 3, and the programmable logic controller 5 described above.

The sensor amplifier 3 inputs a 0 to 5V signal to the programmable logic controller 5 via the output line 4, the programmable logic controller 5 compares the input signal with a preset threshold, and in the case where the signal exceeds the upper limit threshold, or in the case where it falls below the lower limit threshold, operates the alarm lamp 9a of the touch panel 8. The alarm light 9a flashes and draws an operator's attention. The judgment apparatus of the thickness of sheet type food of the present invention operates in this manner.

Here, since the programmable logic controller 5 transmits data to the touch panel 8 via the RS232C output line 7, data of the thickness is monitored over time and stored.

### Embodiment 3

Next is a description of an embodiment of a production apparatus based on FIG. 1. In FIG. 1, the programmable logic controller 5 is provided with a modulated value output line 6, and the end of this modulated value output line 6 is connected to a regulator (not shown in the figure) that sets the slice width of a slicer on a cheese production apparatus body (not shown in the figure, that is, a thickness regulator in the claims).

The programmable logic controller 5, which has a preset value input thereto, compares this set value with the 0 to 5V analog signal input from the output line 4, calculates a controlled variable such that the analog signal input approaches the set value, and outputs the calculated controlled variable to the above described regulator that sets slice width via the output line 6.

In this manner, cheese slices are produced under automatic control such that the thickness of the cheese slices matches the set value.

Here, similarly to embodiment 2 described previously, a programmable logic controller 5 transmits data to a touch panel 8 via an RS232C output line 7, the data is monitored over time and stored, and furthermore the alarm light is operated.

### Embodiment 4

In the apparatus of embodiment 1, a laser displacement meter (not shown in the figure, Keyence, LB080) was installed instead of the ultrasonic displacement meter 2 and the sensor amplifier 3.

In this apparatus, similarly to embodiment 1, when the position C1 of the surface of the cheese slice laminated material C was measured by laser light, and data monitored over time and stored, the thickness could be measured with no problem.

Especially, in the trend graph 9, when set to a sampling frequency of 10Hz and the average run quantity set to 10, an accurate trend graph could be displayed.

### Embodiment 5

Next is a description of an embodiment of a method of measuring the thickness of sheet type food , wherein the apparatus of embodiment 1 is used.

Using a conventional method, cheese was emulsified in a kettle type emulsifier with rising temperature, and after finishing emulsifying at 85°C it was poured into a film pipe made of polyethylene-teresphthalate 6.5cm in diameter. The film was united firmly from outside to form a 2.3mm flat shape, the cheese and film then cooled immediately afterwards in iced water for 60 seconds, and cut together to obtain 10cm square cheese slices. The cheese slices were stacked in lots of 32 pieces to make a laminated material C (refer to FIG. 1, hereunder the same).

Furthermore, the ultrasonic displacement meter 2 had been operated in advance and the zero point set to the position of the surface 1a of the belt conveyor 1. Here, this setting was performed using the touch panel 8.

The laminated material C was conveyed on the belt conveyor 1. When it passed under the ultrasonic displacement meter 2, the position C1 of the surface of the laminated material C was measured.

The measured result was displayed on the touch panel 8 as a real time value, and change with time was displayed as a trend graph.

In the procedure above, when the change in the thickness of the laminated material C was monitored continuously for 18 hours, it was possible to display the value of the thickness constantly. Furthermore, the trend graph showing the change of thickness over time could be displayed with no problem.

### Embodiment 6

Next is a description of an embodiment of a method of judging the thickness of sheet type food , wherein the apparatus of embodiment 1 is used.

In the procedure of embodiment 5, the programmable logic controller 5 was set such that the result of measuring the position C1 of the surface of the laminated material C by the ultrasonic displacement meter 2 was compared with the upper limit and lower limit values that had been input to the programmable logic controller 5 in advance, and in the case where it deviated outside the upper and lower limit, the alarm light 9a of the touch panel 8 flashed.

Similarly to embodiment 5, when the variation of the thickness of the laminated material C was monitored continuously for 18 hours, both in the case where the thickness exceeded the upper limit value, and in the case where it fell below the lower limit value, the alarm light 9a flashed with no problem, thus it was possible to judge the thickness.

### Embodiment 7

Next is a description of an embodiment of a method of producing sheet type food of the present invention, wherein the apparatus of embodiment 1 is used.

In the procedure of embodiment 5, the position C1 of the surface of the laminated material C was measured by the ultrasonic displacement meter 2, and output on the output line 4 as a 0 to 5V analog signal.

Here, this output line 4 was connected to a programmable logic controller 5. The programmable logic controller 5 has a modulated value output line 6, and an end of this modulated value output line 6 is connected to a servo motor (not shown in the figure) that regulates the clearance when uniting the film pipe filled with melted cheese firmly from the outside (refer to embodiment 5).

The programmable logic controller 5, which had a preset value input thereto, compared this set value with the 0 to 5V analog signal input from the output line 4, and calculated a controlled variable such that the analog signal input approached the set value.

The calculated controlled variable was output through the modulated value output line 6, the servo motor (not shown in the figure) was operated based on this controlled variable, and the amount of clearance when uniting the film pipe filled with melted cheese firmly from the outside was regulated appropriately.

As a result, cheese slices with a predetermined thickness could be produced under automatic control with no problem.

### INDUSTRIAL APPLICABILITY

A method of producing sheet type food, and apparatus for the same of the present invention do not require manual operation, are capable of continuous monitoring, have quick response, and can contribute to an improvement in yield, stability of quality, and cost reduction.

## Claims

1. A method of producing sheet type food, **characterised by** comprising:
producing stacked sheet type food continuously;
conveying the stacked sheet type food continuously;
measuring the position of a surface of the stacked sheet type food continuously by an ultrasonic displacement meter, and
regulating the thickness of the sheet type food such that the measurement value approaches a predetermined set value.

2. An apparatus for producing sheet type food comprising:
a main body of a production apparatus which produces stacked sheet type food, and
a thickness regulator which is installed in said the main body of the production apparatus and regulates the thickness of the sheet type food,
**characterised in that** the apparatus further comprises:
a conveyor (1) which conveys the stacked sheet type food produced by the production apparatus continuously;
an ultrasonic displacement meter (2) which is positioned at a predetermined height above the conveyor and measures the position of a surface of the stacked sheet type food conveyed;
an amplifier unit (3) which is connected to the ultrasonic displacement meter and converts an output value from the ultrasonic displacement meter into a measurement signal for output; and
a controller (5) which is connected to the output side of the amplifier unit, and calculates a modulated value by which the measurement signal input from the amplifier unit approaches a set value set in advance and outputs the modulated value to the thickness regulator, and the stacked sheet type food is produced under control such that the thickness of the stacked sheet type food is kept to a predetermined thickness.

## Patentansprüche

1. Verfahren zum Herstellen blattförmiger Nahrung, **dadurch gekennzeichnet, dass** es umfasst:
kontinuierliches Herstellen gestapelter blattförmiger Nahrung;
kontinuierliches Befördern der gestapelten blattförmigen Nahrung;
kontinuierliches Messen der Position einer Oberfläche der gestapelten blattförmigen Nahrung mit einem Ultraschall-Verschiebungsmessgerät, und
Regulieren der Dicke der blattförmigen Nahrung derart, dass sich der Messwert einem vorbestimmten Sollwert annähert.

2. Vorrichtung zum Herstellen blattförmiger Nahrung, enthaltend:
einen Hauptkörper einer Herstellungsvorrichtung, die gestapelte blattförmige Nahrung herstellt, und
eine Dickenreguliereinrichtung, die in dem Hauptkörper der Herstellungsvorrichtung installiert ist und die Dicke der blattförmigen Nahrung reguliert,
**dadurch gekennzeichnet, dass** die Vorrichtung weiterhin enthält:
eine Fördereinrichtung (1), die die gestapelte blattförmige Nahrung befördert, die von der Herstellungsvorrichtung kontinuierlich hergestellt wird;
ein Ultraschall-Verschiebungsmessgerät (2), das in einer vorbestimmten Höhe über der Fördereinrichtung angeordnet ist und die Position einer Oberfläche der gestapelten, blattförmigen Nahrung misst, die befördert wird;
eine Verstärkereinheit (3), die mit dem Ultraschall-Verschiebungsmessgerät verbunden ist und einen Ausgangswert aus dem Ultraschall-Verschiebungsmessgerät in ein Messsignal zur Ausgabe umwandelt; und
eine Steuereinheit (5), die mit der Ausgangsseite der Verstärkereinheit verbunden ist und einen modulierten Wert berechnet, durch den das Messsignal, das von der Verstärkereinheit eingegeben wird, einen Sollwert erreicht, der zuvor eingestellt wurde, und den modulierten Wert an die Dickenreguliereinrichtung ausgibt,
wobei die gestapelte, blattförmige Nahrung unter Steuerung derart hergestellt wird, dass die Dicke der gestapelten, blattförmigen Nahrung auf einer vorbestimmten Dicke gehalten wird.

## Revendications

1. Procédé de production d'un aliment du type feuille, **caractérisé en ce qu'**il comprend :
la production en continu d'un aliment du type feuille superposé ;
l'acheminement en continu d'un aliment du type feuille superposé ;
la mesure en continu de la position d'une surface de l'aliment du type feuille superposé par une mesure ultrasonique du déplacement, et
l'ajustement de l'épaisseur de l'aliment du type feuille de sorte que la valeur de mesure approche une valeur de consigne prédéterminée.

2. Appareil pour produire un aliment du type feuille comprenant :
un corps principal d'un appareil de production qui produit un aliment du type feuille superposé, et
un régulateur d'épaisseur qui est installé dans ledit corps principal de l'appareil de production et régule l'épaisseur de l'aliment du type feuille,
**caractérisé en ce que** l'appareil comprend en outre :
un moyen d'acheminement (1) qui achemine l'aliment du type feuille superposé produit en continu par l'appareil de production ;
un dispositif de mesure ultrasonique du déplacement (2) qui est positionné à une hauteur prédéterminée au-dessus du dispositif d'acheminement et mesure la position d'une surface de l'aliment du type feuille superposé acheminé ;
une unité formant amplificateur (3) qui est raccordée au dispositif de mesure ultrasonique du déplacement et convertit une valeur de sortie provenant du dispositif de mesure ultrasonique du déplacement en un signal de mesure pour sortie ; et
un dispositif régulateur (5) qui est raccordé au côté de sortie de l'unité formant amplificateur, et calcule une valeur modulée par laquelle l'entrée du signal de mesure provenant de l'unité formant amplificateur approche une valeur de consigne définie à l'avance et délivre la valeur modulée au régulateur d'épaisseur, et l'aliment du type feuille superposé est produit sous contrôle de telle sorte que l'épaisseur de l'aliment du type feuille superposé est maintenue à une épaisseur prédéterminée.
